# EUROPEAN PATENT SPECIFICATION

(11) **EP 0 368 599 B1**
(45) Date of publication and mention of the grant of the patent: **20.04.1994**
(21) Application number: 89311489.2
(22) Date of filing: 07.11.1989
(51) Int. Cl.: F24H 8/00

(54) **Heat recovery systems**
Wärmerückgewinnungsanlage
Disposition pour la récupération de la chaleur

(30) Priority: 08.11.1988 GB 8826117
(43) Date of publication of application: 16.05.1990
(73) Proprietor: EMVERTEC LIMITED, Harrow Middlesex, HA1 3JG (GB)
(72) Inventor: Vernon, John Richard, Harron-on-the-Hill Middlesex HA1 3JG (GB)
(74) Representative: Gillam, Francis Cyril

(56) References cited:
- DE-A- 3 101 362
- DE-A- 3 225 926

## Description

This invention concerns heat recovery systems, and in particular concerns methods of and apparatus for recovering heat from the flue gases of a combustion heating plant, and to boiler installations utilising such apparatus.

More specifically, this invention in one aspect relates to a method of recovering latent heat from the flue gases of a combustion heating plant by passing the flue gases through a first heat exchanger where the heat transfer characteristics cause condensation of the moisture of combustion by a transfer of heat from the gases to a liquid heat transfer medium separately passed through the first heat exchanger.

In a second aspect, this invention relates to apparatus for recovering heat from the flue gases of a combustion heating plant, which apparatus includes a first heat exchanger arranged to lower the temperature of the flue gases by separately passing a cool liquid heat transfer medium therethrough so as to cause condensation of the moisture of combustion.

When a fuel - such as oil, gas or coal - is combusted to generate heat, the gaseous products of combustion (hereinafter referred to as "flue gases") are most often lead away for discharge to the atmosphere by means of a suitable flue or chimney. The temperature of the flue gases on entering the flue are usually very much higher than the ambient temperature and, even if a relatively long flue is employed (such as a chimney stack), the temperature of the gases leaving the flue outlet still are likely to be at a temperature considerably above the ambient temperature. The discharge of these hot gases represents a considerable thermal loss, leading to lower efficiencies in the heating plant, and also to higher operating costs.

In view of the above, it is known to recover some heat from the flue gases of such plants, by passing the flue gases through a heat exchanger. However, care must be taken to ensure that the flue gases - which contain a relatively large amount of water vapour - are not cooled to below the dew point, for the resultant condensate at least is corrosive, if not highly so. Moreover, on leaving the heat exchanger the temperature of the flue gases must still be well above the dew point, in order to allow for any cooling of the flue gases which might take place in the flue, after those gases have left the heat exchanger.

It is also known to employ a heat exchanger which is arranged deliberately to reduce the temperature of the flue gases to below the dew point, in order to recover at least some latent heat of condensation, but in this case special measures must then be taken to ensure that the resulting condensate causes no damage, both within the heat exchanger and in the flue itself. For example, it may be necessary to line the flue with a stainless steel material - and this leads to very high installation costs. In any event, on a large scale installation, it may not be possible to fit a stainless steel liner to the flue gas chimney.

Despite the above and particularly in the case of the combustion of gases (such as natural gas), where there is a high water vapour content but insignificant traces of highly corrosive products in the flue gas, there are significant advantages to be gained by condensing some or all of the moisture from the flue gas. This is because the recoverable latent heat of condensation is very much greater per degree of cooling than the recoverable sensible heat that can be obtained per degree of cooling. For example, in DE-A-3 101 362, there is proposed apparatus wherein the flue gas is cooled to an extent sufficient to produce condensate, the gas then being re-heated so no condensate is present in the gases discharge for instance to a chimney. In the method of this prior art, there is the disadvantage that the droplets of condensate are entrained in the flue gas flow and so are re-heated in a second heat exchanger, so lowering the efficiency of the process.

It is a principal aim of the present invention to provide both a method of and apparatus for recovering heat from the flue gases of a combustion heating plant, but particularly a natural gas plant, where the flue gases are cooled to condense some or most of the moisture in order to recover at least some latent heat of condensation of that water vapour, and the removal of the condensate is optimised to enhance the efficiency of the process.

Accordingly, one aspect of the present invention provides a method of recovering latent heat from the flue gases of a combustion heating plant by passing the flue gases through a first heat exchanger where the heat transfer characteristics cause condensation of the moisture of combustion by the transfer of heat from the gases to a liquid heat transfer medium separately passed through the first heat exchanger, the cooled flue gases then being passed through a second heat exchanger where the temperature of the gases is raised to significantly above the dew point thereof by the transfer of heat thereto from a heat transfer medium which has been heated to above the cooled flue gas temperature and is separately passed through the second heat exchanger, characterised in that following the passage of the flue gases through the first heat exchanger, the direction of flow of the flue gases is forced suddenly to change, to cause condensed droplets of water to collect for extraction from the flue gases flow.

It will be appreciated that in performing the method of this invention, the flue gases are first cooled to condense some of the water vapour carried by those flue gases and releasing the latent heat of condensation therefrom. In order to effect this condensation, it may not be necessary to reduce the bulk temperature of the gases to below the dew point, principally dependent upon the design of the first heat exchanger and the relative temperatures of the flue gases and heat transfer medium. The droplets are extracted by forcing the gases suddenly to change direction and then very much less heat will be required to re-heat the cooled gases to significantly above the dew point thereof, because essentially none of the condensed water will be evaporated.

The temperature to which the flue gases has to be re-heated depends upon the overall installation design. The aim should be to reheat the flue gases to an extent sufficient to ensure that no further condensation will take place before the flue gases are released to the external ambient, to protect the associated ducts, chimneys and so on from the corrosive effects of such condensation.

In performing the method of this invention, the heat transfer medium passed through the second heat exchanger may be different from that passed through the first heat exchanger. For example, relatively hot heat transfer medium for passing through the second heat exchanger could be derived from an associated boiler, whereas the heat transfer medium passed through the first heat exchanger could be used to pre-heat boiler feed or make-up water. Alternatively, at least a portion of the heat transfer medium passed through the first heat exchanger may be passed through the second heat exchanger, following the heating of that fluid in the first heat exchanger. Then, by appropriately circulating the heat transfer medium through the two heat exchangers, the thermal energy of that heat transfer medium will be increased, making heat available for external purposes.

A particular advantage of the performance of the method of this invention is that there is no need for any special measures to be taken to protect a flue, chimney or the like duct to which the flue gases are directed, because no more condensation need occur therein than would be the case were no heat recovered, on account of the fact that water vapour has been removed from the gases by the heat recovery method. As a consequence, the installation of a plant to perform the method of this invention may be relatively cheap as compared to other known forms of condensing heat recovery processes, though of course special measures must still be taken to ensure safe collection and disposal of the condensate resulting from the lowering of the flue temperature to below the dew point.

Most preferably, the liquid heat transfer medium is water. Then, for a case where the combustion heating plant comprises a boiler for a space heating system where the heating medium temperatures are suitable, that water may be mixed appropriately with the circulated water for the space heating. In an alternative, where the combustion heating plant comprises a simple steam- generating boiler, the boiler feed or make-up water may first be pre-heated by the method of this invention, utilising the sensible heat and latent heat of condensation recovered from the flue gases.

According to a second aspect of the present invention, there is provided apparatus for recovering heat from the flue gases of a combustion heating plant, which apparatus includes a first heat exchanger arranged to lower the temperature of the flue gases by separately passing a cool liquid heat transfer medium therethrough so as to cause condensation of the moisture of combustion a second heat exchanger arranged in series along the flue gas path with respect to the first heat exchanger, means to remove condensate from the flue gases and disposed between the first and second heat exchangers, and means to pass through the second heat exchanger a heated heat transfer medium whereby the temperature of the flue gases is raised to significantly above the dew point thereof in the second heat exchanger, characterised in that said means to remove condensate comprises a duct configured suddenly to cause the direction of flow of the flue gases to change, so as to effect the removal of the droplets of condensate from the cooled flue gases.

The apparatus of this invention as described above is adapted to be capable of performing the method of this invention, also as described above. Thus, the temperature of the flue gases passing through the first heat exchanger should be cooled sufficiently to cause condensation of the moisture in those gases by the transfer of heat to the heat transfer medium also passed through the first heat exchanger. Then, following the removal of the condensate from those flue gases by changing suddenly the gas flow direction, the temperature thereof is raised once more to above the dew point, by the transfer of heat thereto from the heat transfer medium passed through the second heat exchanger. In this way, the enthalpy of the flue gases is reduced, with the recovered heat becoming available in the heat transfer medium passed through the first heat exchanger.

The removal of the droplets of condensate is positively achieved by changing the direction of flow of the gas, for instance by means of a plenum chamber arranged after the condensing heat exchanger, or between two distinct parts of the condensing heat exchanger. In addition, a known form of droplet eliminator may be arranged in the gas flow path after the condensing heat exchanger.

In one embodiment, the apparatus includes a generally U-shaped flue gas duct, with the plenum chamber arranged in the lowermost part of that duct and having a two part condensing heat exchanger, with one of the two parts arranged in each of the two limbs respectively of that U-shaped duct.

By configuring the apparatus as described above, with a U-shaped flue gas duct, the apparatus of this invention may relatively easily be fitted into an existing, generally horizontal flue leading from a combustion heating plant. A section of that flue may be removed, and then the apparatus fitted into that section, with the U-shaped duct depending downwardly from the horizontal section of that flue.

Preferably, the means to pass the heat transfer media through the two heat exchangers is arranged to circulate through the second heat exchanger at least a portion of the heat transfer medium circulated through the first heat exchanger, following the heating of the medium in that first heat exchanger. The amount of heat required to raise the temperature of the flue gases in the second heat exchanger is less than the recovered heat obtained from those flue gases in the first heat exchanger. Less heat transfer medium volume flow may therefore be required through the second heat exchanger than through the first heat exchanger, and so a proportioning arrangement may be provided to divide the flow of the heat transfer medium as appropriate, having regard to the parameters of the system. On the other hand, by appropriate design of the first and second heat exchangers, the full heat transfer medium flow may be circulated through both heat exchangers.

It is advantageous for the apparatus to include a control system which monitors the temperatures of the heat transfer medium supplied to and led away from the apparatus, as well as at certain points within the flow paths within the apparatus, and to divide the flow as appropriate between the two heat exchangers. Conveniently, the first heat exchanger is divided into a sensible heat exchanger and a condensing heat exchanger, arranged in series. The sensible heat exchanger (where no condensation takes place) may be relatively simple and made from conventional materials, for within this heat exchanger simple sensible heat recovery processes take place. The condensing heat exchanger, by contrast, must be relatively specialised in that the condensate must be collected to allow its safe disposal and moreover the heat exchanger must be made from suitable materials having regard to the corrosive nature of the condensate.

This invention extends to a combustion heating plant whenever fitted with heat recovery apparatus of this invention as described above.

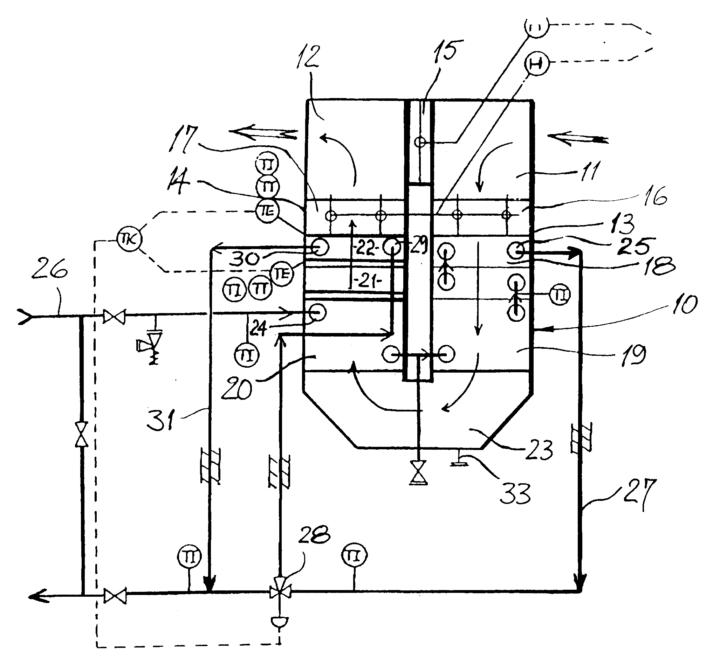

By way of example only, one specific embodiment of apparatus for recovering heat from the flue gases of a boiler installation and arranged in accordance with this invention, to perform the method also of this invention, will now be described with reference to the accompanying drawing, which diagrammatically illustrates the apparatus and the various flow paths associated therewith.

The embodiment of apparatus of this invention comprises a U-shaped duct 10 for example of rectangular cross-sectional shape, and fitted with a pair of adapters 11 and 12, one at the upper end of each arm 13 and 14 respectively of the duct 10, which adapters 11 and 12 allow the duct 10 to be fitted in a horizontal run of a flue (not shown). Between the adapters 11 and 12, there is provided a damper 15 which normally will be closed, so directing the flue gases through the U-shaped duct 10, on passing from the inlet adapter 11 to the outlet adapter 12, but permitting the gases to pass directly from one adapter to the other, when the damper 15 is opened. Similarly, further dampers 16 and 17 are fitted in the arms 13 and 14 respectively, immediately below the associated adapters 11 and 12.

Fitted into arm 13 of the duct 10, below the associated damper 16, is a two-stage sensible heat exchanger 18, and immediately therebelow is fitted a condensing heat exchanger 19.

In the lower portion of the other arm 14 of the duct 10, there is fitted a further condensing heat exchanger 20, and above that there is a droplet extractor 21, in the form of a fine stainless steel wool filter. Between the droplet extractor 21 and the damper 17, there is mounted a re-heat heat exchanger 22.

A plenum chamber 23 is defined in the lower part of the duct 10, between the two condensing heat exchangers 20 and 19, and a suitable drain 33 is provided for condensate, collecting within that plenum chamber 23.

Suitable pipes are provided to allow water to be passed in series from the inlet 24 of the second condensing heat exchanger 20 to the outlet 25 from the sensible heat exchanger 18, via the condensing heat exchanger 19 and both stages of the sensible heat exchanger 18.

Externally of the apparatus described above, suitable pipes are provided along with associated valves to permit the apparatus to perform pre-heating on feed water for a boiler. The boiler feed water is supplied to pipe 26 which leads to the inlet 24, and the pre-heated boiler feed water is supplied along pipe 27, connected to the outlet 25. In pipe 27, there is provided a three way valve 28 from which a pipe is taken to the inlet 29 of the re-heat heat exchanger 22; the outlet 30 of that heat exchanger is connected by a pipe 31 back to the boiler feed water pipe 27.

The three-way valve 28 is controlled by temperature controller TIC, receiving inputs from temperature sensors TE, disposed respectively to each side of the re-heat heat exchanger 22 for monitoring purposes. The apparatus and its associated pipework is also fitted with various temperature indicators TI, as indicated.

Analysis of the apparatus described above shows that it is possible to supply boiler feed water at 10°C to pipe 26, and to deliver boiler feed water, after passing through the heat exchangers, at 93°C. This is obtained with an inlet flue gas temperature of 220°C with a moisture content of 120 g/Kg, on a dry basis. The sensible heat exchanger 18 reduces the temperature of the gas to about 56°C and then considerable condensation, extracting latent heat of condensation, takes place in the condensing heat exchangers 19 and 20. The condensate collects in the plenum chamber 23 from where it can be removed for safe disposal, via drain 30. On leaving the second condensing heat exchanger 20, the gas temperature is about 45°C with a moisture content of 65 g/Kg (about 90% RH). The gas temperature is raised in the re-heat heat exchanger 22, up to about 75°C with a RH of about 30% - that is, 25°C above its dew point. The temperature of the water leaving the sensible heat exchanger 18 is approximately 100°C (with an elevated pressure within the system) and the volume of water circulated through the re-heat heat exchanger 22 coupled with the heat loss from that water reduces the boiler feed water temperature to about 93°C.

By using the apparatus of this invention, significant heat recovery is obtained by extracting the latent heat of condensation of the moisture content of the flue gases, so reducing the enthalpy of those gases. This may however be achieved without the need to effect any alterations to the flue, chimney or the like to which those flue gases are supplied, for no condensation will take place in the flue or chimney, which would not otherwise have taken place were this heat recovery method not employed.

## Claims

1. A method of recovering latent heat from the flue gases of a combustion heating plant by passing the flue gases through a first heat exchanger (19) where the heat transfer characteristics cause condensation of the moisture of combustion by the transfer of heat from the gases to a liquid heat transfer medium separately passed through the first heat exchanger, the cooled flue gases then being passed through a second heat exchanger (22) where the temperature of the gases is raised to significantly above the dew point thereof by the transfer of heat thereto from a heat transfer medium which has been heated to above the cooled flue gas temperature and is separately passed through the second heat exchanger, characterised in that following the passage of the flue gases through the first heat exchanger, the direction of flow of the flue gases is forced suddenly to change, to cause condensed droplets of water to collect for extraction from the flue gases flow.

2. A method according to Claim 1, characterised in that following the passage of the flue gases through the first heat exchanger, the flue gases are passed through a plenum chamber within which the direction of flow is caused suddenly to change and in which the condensed droplets collect.

3. A method as claimed in Claim 1 or Claim 2, characterised in that at least a portion of the heat transfer medium passed through the first heat exchanger (19) is passed through the second heat exchanger (22), following the heating of that fluid in the first heat exchanger.

4. Apparatus for recovering heat from the flue gases of a combustion heating plant, which apparatus includes a first heat exchanger (19) arranged to lower the temperature of the flue gases by separately passing a cool liquid heat transfer medium therethrough so as to cause condensation of the moisture of combustion, a second heat exchanger (22) arranged in series along the flue gas path with respect to the first heat exchanger (19), means to remove condensate from the flue gases and disposed between the first and second heat exchangers, and means to pass through the second heat exchanger a heated heat transfer medium whereby the temperature of the flue gases is raised to significantly above the dew point thereof in the second heat exchanger, characterised in that said means to remove condensate comprises a duct configured suddenly to cause the direction of flow of the flue gases to change, so as to effect the removal of the droplets of condensate from the cooled flue gases.

5. Apparatus as claimed in claim 4, characterised in that said duct is in the form of a plenum chamber (23) disposed between the first and second heat exchangers (19,22).

6. Apparatus as claimed in Claim 5, characterised in that there is a generally U-shaped flue gas duct (10) with a plenum chamber (23) arranged in the lowermost part of that duct, the first heat exchanger being in two parts (19,20) with one of the two parts arranged in each of the two limbs respectively of the U-shaped duct, and preferably there is a droplet extractor (21) disposed downstream of the second part (20), before the second heat exchanger (22).

7. Apparatus as claimed in any of Claims 4 to 6, characterised in that said means to pass the heat transfer media through the two heat exchangers are arranged to circulate through the second heat exchanger (22) at least a portion of the heat transfer medium circulated through the first heat exchanger (19) following the heating of the medium in that first heat exchanger.

8. Apparatus as claimed in any of claims 4 to 7, characterised in that the apparatus includes a control system which monitors the temperatures of the heat transfer medium supplied to and led away from the apparatus, as well as at predetermined points within the flow paths within the apparatus, and divides (28) the flow as appropriate between the two heat exchangers (19,22).

9. Apparatus as claimed in any of Claims 4 to 8, characterised in that the first heat exchanger is divided into a sensible heat exchanger (18) and condensing heat exchanger (19,20) arranged in series.

10. A boiler installation for the heating of water by the combustion of fuel characterised by the addition of apparatus as claimed in any of Claims 4 to 9 to the flue gas duct of the installation, the boiler feed or make-up water (26) being pre-heated by the first heat exchanger (19,22), and water heated by the boiler being circulated through the second heat exchanger for re- heating of the gases.

## Patentansprüche

1. Verfahren zur Rückgewinnung latenter Wärme aus den Verbrennungsgasen einer Verbrennungsheizungsanlage, indem die Verbrennungsgase durch einen ersten Wärmetauscher (19) geführt werden, worin die Wärmeübertragungseigenschaften die Kondensation der Feuchtigkeit der Verbrennung durch die Übertragung von Wärme von den Gasen an ein flüssiges Wärmeübertragungsmittel bewirken, welches separat durch den ersten Wärmetauscher geführt wird, wobei die gekühlten Verbrennungsgase danach durch einen zweiten Wärmetauscher (22) geführt werden, wo die Temperatur der Gase deutlich über deren Taupunkt durch die Übertragung von Wärme von einem Wärmeübertragungsmittel erhöht wird, welches über die gekühlte Verbrennungsgastemperatur erwärmt wurde und separat durch den zweiten Wärmetauscher geführt wird, **dadurch gekennzeichnet,** daß nach der Durchführung der Verbrennungsgase durch den ersten Wärmetauscher die Durchflußrichtung der Verbrennungsgase plötzlich verändert wird, so daß sich kondensierte Wassertröpfchen für die Absonderung aus dem Verbrennungsgasfluß sammeln.

2. Verfahren nach Anspruch 1, **dadurch gekennzeichnet,** daß nach dem Durchgang der Verbrennungsgase durch den ersten Wärmetauscher, die Verbrennungsgase durch eine Sammelkammer geführt werden, in der die Durchflußrichtung plötzlich verändert wird und in der sich die kondensierten Tröpfchen sammeln.

3. Ein Verfahren nach dem Anspruch 1 oder dem Anspruch 2, **dadurch gekennzeichnet,** daß mindestens ein Teil des Wärmeübertragungsmmittels, welches durch den ersten Wärmetauscher (19) geführt wird, durch den zweiten Wärmetauscher (22) nach der Erwärmung dieser Flüssigkeit in dem ersten Wärmetauscher geführt wird.

4. Vorrichtung für die Rückgewinnung von Wärme aus den Verbrennungsgasen einer Verbrennungsheizungsanlage, welche einen ersten Wärmetauscher (19) enthält, der so angeordnet ist, daß er die Temperatur der Verbrennungsgase senkt, indem separat ein kühles, flüssiges Wärmeübertragungsmittel durch diesen geführt wird, so daß die Kondensation der Verbrennungsfeuchte bewirkt wird, und einen zweiten Wärmetauscher (22), der entlang des Weges der Verbrennungsgase in bezug auf den ersten Wärmetauscher (19) nachgeschaltet ist, eine Vorrichtung zur Entfernung des Kondensats aus den Verbrennungsgasen und angeordnet zwischen dem ersten und dem zweiten Wärmetauscher, und eine Vorrichtung zur Leitung eines erwärmten Wärmeübertragungsmittels durch den zweiten Wärmetauscher, wobei die Temperatur der Verbrennungsgase auf einen Wert angehoben wird, der erheblich über ihrem Taupunkt in dem zweiten Wärmetauscher liegt, **dadurch gekennzeichnet,** daß die Vorrichtung für die Entnahme von Kondensat einen Kanal enthält, der so gestaltet ist, daß er eine plötzliche Änderung der Durchflußrichtung der Verbrennungsgase bewirkt, so daß eine Entfernung der Kondensattröpfchen aus den gekühlten Verbrennungsgasen erreicht wird.

5. Vorrichtung nach Anspruch 4, **dadurch gekennzeichnet,** daß der Kanal die Form einer Sammelkammer (23) hat, welche zwischen dem ersten und dem zweiten Wärmetauscher (19, 22) angeordnet ist.

6. Vorrichtung nach Anspruch 5, **dadurch gekennzeichnet,** daß ein im allgemeinen U-förmiger Verbrennungsgaskanal (10) mit einer Sammelkammer (23) in dem alleruntersten Teil des Kanals angeordnet ist, daß der erste Wärmetauscher aus zwei Teilen (19, 20) besteht, wobei einer der beiden Teile in einem der beiden Schenkel des U-förmigen Kanals angeordnet ist, und daß vorzugsweise ein Tröpfchenabsauger (21) stromabwärts vom zweiten Teil (20) vor dem zweiten Wärmetauscher (22) angeordnet ist.

7. Vorrichtung nach einem der Ansprüche 4 bis 6, **dadurch gekennzeichnet,** daß die Vorrichtung zum Leiten des Wärmeübertragungsmittels durch die zwei Wärmetauscher so angeordnet ist, daß durch den zweiten Wärmetasucher (22) mindestens ein Teil des Wärmeübertragungsmittels zirkuliert wird, welches durch den ersten Wärmetauscher (19) zirkuliert ist, und zwar nach der Erwärmung des Mittels in diesem ersten Wärmetauscher.

8. Vorrichtung nach einem der Ansprüche 4 bis 7, **dadurch gekennzeichnet,** daß die Vorrichtung ein Steuerungssystem für die Überwachung der Temperaturen des Wärmeübertragungsmittels beinhaltet, welches zu der Vorrichtung hin und von der Vorrichtung weggeführt wird, sowie auch an vorbestimmten Punkten innerhalb des Durchflußweges innerhalb der Vorrichtung, und das den Durchfluß in geeigneter Weise zwischen den zwei Wärmetauscher (19, 22) verteilt (28).

9. Vorrichtung nach einem der Ansprüche 4 bis 8, **dadurch gekennzeichnet,** daß der erste Wärmetauscher in einen freien Wärmetauscher (18) und einen Kondensationswärmetauscher (19, 20) aufgeteilt ist, die hintereinander angeordnet sind.

10. Boilerinstallation für die Erwärmung von Wasser durch die Verbrennung von Brennstoff**, dadurch gekennzeichnet,** daß die Vorrichtung nach einem der Ansprüche 4 bis 9 in den Verbrennungsgaskanal der Installation eingesetzt ist, wobei das Speisewasser oder Zusatzwasser des Boilers (26) von dem ersten Wärmetauscher (19, 22) vorgewärmt wird und das Wasser, das von dem Boiler erwärmt wird, durch den zweiten Wärmetauscher für die Wiedererwärmung der Gase zirkuliert wird.

## Revendications

1. Procédé pour récupérer de la chaleur latente des gaz brûlés d'une installation de chauffage à combustion en faisant passer les gaz brûlés à travers un premier échangeur de chaleur (19) dans lequel les caractéristiques de transfert thermique provoquent la condensation de l'humidité de combustion par transfert de chaleur de la part des gaz à un milieu liquide de transfert thermique que l'on fait passer séparément à travers le premier échangeur de chaleur, les gaz brûlés refroidis étant ensuite conduits à travers un second échangeur de chaleur (22) dans lequel on élève la température des gaz nettement au-dessus de leur point de rosée en leur transférant de la chaleur de la part d'un milieu de transfert thermique qui a été échauffé jusqu'à une température supérieure à celle des gaz brûlés refroidis et que l'on fait passer séparément à travers le second échangeur de chaleur, caractérisé en ce qu'à la suite du passage des gaz brûlés à travers le premier échangeur de chaleur, on fait brusquement changer la direction d'écoulement des gaz brûlés, pour provoquer le rassemblement de gouttelettes d'eau condensée pour les extraire de l'écoulement de gaz brûlés.

2. Procédé selon la revendication 1, caractérisé en ce qu'à la suite du passage des gaz brûlés à travers le premier échangeur de chaleur, on fait passer les gaz brûlés à travers une chambre collectrice dans laquelle on fait brusquement changer la direction de l'écoulement et dans laquelle les gouttelettes condensées se rassemblent.

3. Procédé selon la revendication 1 ou 2, caractérisé en ce qu'on fait passer également à travers le deuxième échangeur de chaleur (22) une partie au moins du milieu de transfert thermique que l'on fait passer à travers le premier échangeur de chaleur (19), à la suite de l'échauffement de ce fluide dans le premier échangeur de chaleur.

4. Dispositif pour récupérer de la chaleur des gaz brûlés d'une installation de chauffage à combustion, ce dispositif comprenant un premier échangeur de chaleur (19) agencé pour réduire la température des gaz brûlés en le faisant séparément traverser par un milieu liquide de transfert thermique froid, de façon à provoquer la condensation de l'humidité de combustion, un second échangeur de chaleur (22) monté en série le long du trajet des gaz brûlés par rapport au premier échangeur de chaleur (19), des moyens pour ôter du condensat dans les gaz brûlés et disposés entre le premier et le second échangeur de chaleur, et des moyens pour faire passer à travers le second échangeur de chaleur un milieu de transfert thermique chauffé de façon à élever la température des gaz brûlés nettement au-dessus de leur point de rosée dans le second échangeur de chaleur, caractérisé en ce que lesdits moyens pour ôter du condensat comprennent un conduit configuré pour provoquer un brusque changement de la direction d'écoulement des gaz brûlés, de façon à effectuer l'ablation des gouttelettes de condensat dans les gaz brûlés refroidis.

5. Dispositif selon la revendication 4, caractérisé en ce que le conduit est sous la forme d'une chambre collectrice (23) disposée entre le premier et le second échangeur de chaleur (19, 22).

6. Dispositif selon la revendication 5, caractérisé par un conduit de gaz brûlés (10) en forme générale de U avec une chambre collectrice (23) agencée dans la partie inférieure de ce conduit, le premier échangeur de chaleur étant en deux parties (19, 20) l'une des deux parties étant disposée dans chacune des deux branches respectivement du conduit en forme de U, tandis qu'il est de préférence prévu un extracteur de gouttelettes (21) disposé en aval de la seconde partie (20), avant le second échangeur de chaleur (22).

7. Dispositif selon l'une quelconque des revendications 4 à 6, caractérisé en ce que lesdits moyens pour faire passer les milieux de transfert thermique à travers les deux échangeurs de chaleur sont agencés pour faire traverser le second échangeur de chaleur (22) par une partie au moins du milieu de transfert thermique auquel on fait traverser le premier échangeur de chaleur (19), à la suite de l'échauffement de ce milieu dans le premier échangeur de chaleur.

8. Dispositif selon l'une quelconque des revendications 4 à 7, caractérisé en ce qu'il comprend un système de commande qui surveille la température du milieu de transfert thermique qui est envoyé au dispositif et en repart, ainsi qu'en différents points prédéterminés dans les trajets d'écoulement à l'intérieur du dispositif, et répartit (28) l'écoulement de manière appropriée entre les deux échangeurs de chaleur (19, 22).

9. Dispositif selon l'une quelconque des revendications 4 à 8, caractérisé en ce que le premier échangeur de chaleur est subdivisé en un échangeur (18) de chaleur sensible et un échangeur de chaleur de condensation (19, 20) disposés en série.

10. Installation de chaudière pour le chauffage d'eau par combustion de combustible, caractérisée par l'adjonction d'un dispositif tel que revendiqué dans l'une quelconque des revendications 4 à 9 au conduit de gaz brûlés de l'installation, l'eau (26) d'alimentation ou d'appoint de la chaudière étant préchauffée par le premier échangeur de chaleur (19, 22) et l'eau chauffée par la chaudière étant envoyée à travers le second échangeur de chaleur pour réchauffer les gaz.
